# EUROPEAN PATENT APPLICATION

(11) **EP 1 608 092 A2**
(43) Date of publication of application: **21.12.2005**
(21) Application number: 05253482.3
(22) Date of filing: 07.06.2005
(51) Int. Cl.: H04H 1/00

(54) **Method and apparatus for using additional service data interactively, and receiver using the method and apparatus**

(30) Priority: 11.06.2004 KR 2004043073
(71) Applicant: SAMSUNG ELECTRONICS CO., LTD., Suwon-si, Gyeonggi-do (KR)
(72) Inventor: Youm, Sun-Hee, Suwon-si Gyeonggi-do (KR); Park, Jeong-hoon, Gwanak-gu Seoul (KR); Park, Sung-il, Suwon-si Gyeonggi-do (KR); Park, Ju-hee, Yeongtong-gu Suwon-si Gyeonggi-do (KR); Seo, Ju Hee, Yeongton-gu Suwon-si Gyeonggi-do (KR)
(74) Representative: Waddington, Richard

(57) **Abstract**

A method and apparatus for interactively using additional data in digital audio broadcasting. The method of interactively using additional data includes: receiving additional data and storing the received additional data in a specified database (322); receiving a user input via a user input interface (326) obtained by decoding information regarding a screen composition contained in service data, transforming the user input into a query that requests a search of the database (322), and outputting the query; and searching the database (322) in response to the query and outputting a result of the searching.

## Description

The present invention relates to digital audio broadcasting (DAB), and more particularly, to a method of and apparatus for providing additional information by receiving the additional information in a specified database in a packet mode, storing it, and searching for the additional information in the database and providing it to a user in response to a user input, and a receiver capable of receiving the additional information.

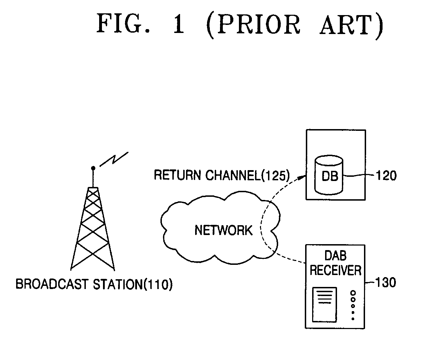

FIG. 1 is a diagram illustrating a method of interactively processing a user input in a digital audio broadcasting (DAB) system. Referring to FIG. 1, when a user requests additional information from a DAB service currently transmitted by a broadcast station 110, a database 120 storing the additional information is accessed via a return channel 125 and the additional information from the database 120 is provided to the user. For instance, while receiving sports relay broadcasting, a caption containing information related to a player may be displayed on a DAB receiver 130. In this case, the user can interactively request a detailed profile of the player via an input unit. For instance, when the name of a player is displayed as a caption and the user selects the name via a user interface such as a touch screen, a mouse, or a stylus pen, information in a database that stores a detailed profile about the player is parsed, the database is accessed via the return channel according to the result of parsing, and the detailed profile is provided to the user.

However, if the return channel is not secured, it is not possible to allow interaction between the user and the broadcast station. In this case, it is impossible to provide a user with additional data during reproduction of a received service.

The present invention provides a method and apparatus for providing additional data by storing all received additional data in a database of a digital audio broadcasting (DAB) receiver, and searching for data that a user requests to receive from the database, and providing the user with the desired data irrespective of whether a return channel exists, and a receiver for receiving the additional information.

According to the present invention there is provided an apparatus and method as set forth in the appended claims. Preferred features of the invention will be apparent from the dependent claims, and the description which follows.

According to one aspect of the present invention, there is provided a method of interactively using additional data, the method including: receiving additional data and storing the received additional data in a specified database; receiving a user input via a user input interface obtained by decoding information regarding a screen composition contained in service data, transforming the user input into a query that requests a search of the database, and outputting the query; and searching the database in response to the query and outputting a result of the searching.

The database may be a relational database. The relational database may include a field including at least one pair of a field label that categorizes stored data and a field type that represents a format in which the field label is stored, and field data including at least one pair of an index, and at least one piece of data corresponding to the index and a length of the data.

The additional data may be received in a packet mode in digital audio broadcasting. The information regarding the screen composition may be received in a stream mode in digital audio broadcasting, and binary format for scene (BIFS) data.

According to another aspect of the present invention, there is provided an apparatus for processing additional data, including: a local database for receiving the additional data and storing the received additional data; and a decoder for decoding information regarding a screen composition to make a user input interface, receiving a user input via the user input interface, transforming the user input into a query that requests a search of the local database, and outputting the query.

The local database may be operable to receive the query, search data in the local database, and output the result of the searching.

According to another aspect of the present invention, there is provided a digital audio broadcast (DAB) system, including: a broadcast station for transmitting binary format for scene (BIFS) data in a stream mode and additional data in a packet mode; a receiver having a BIFS decoder and a database, the receiver being operable to receive the transmitted BIFS data and the transmitted additional data, to store the received additional data in the DB, the BIFS decoder being for decoding the received BIFS data to obtain a BIFS node receiving user input; and a user interface. When a user input is received by the user interface, a query regarding the user input may be made using the BIFS node and the database may be searched to satisfy the query.

According to other aspects of the present invention, there are provided computer-readable storage media encoded with processing instructions for causing a processor to perform various method of the invention.

Additional and/or other aspects and advantages of the present invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIG. 1 is a diagram illustrating a conventional method of interactively processing a user input in a digital audio broadcasting (DAB) system;
FIG. 2 is a diagram illustrating the relationship among a service, service components, and sub channels according to an embodiment of the present invention;
FIG. 3 is a block diagram of a DAB system that receives additional data, makes a database of the additional data, and allows interactive use of the database, according to an embodiment of the present invention;
FIG. 4A illustrates the syntax of additional data transmitted via a main service channel (MSC) according to an embodiment of the present invention;
FIG. 4B illustrates a format that corresponds to a field label and in which data is actually stored according to an embodiment of the present invention;
FIGS. 5A and 5B are examples of a database storing additional data shown in Table 1;
FIG. 6 illustrates data groups into which a database of additional data that will be transmitted to a receiver is divided according to an embodiment of the present invention; and
FIG. 7 is a flowchart of a method of interactively using additional data according to an embodiment of the present invention.

Reference will now be made in detail to an embodiment of the present invention, examples of which are illustrated in the accompanying drawings, wherein like reference numerals refer to the like elements throughout. The embodiment is described below in order to explain the present invention by referring to the figures.

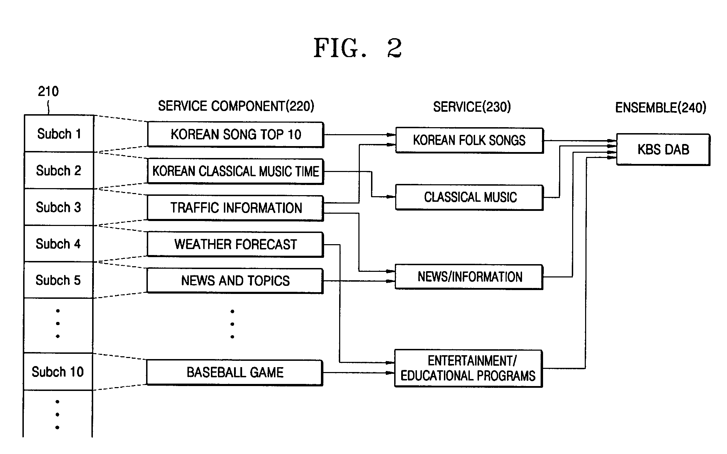

FIG. 2 is a diagram illustrating the relationship among services 230, service components 220, and sub channels 210 of digital audio broadcasting (DAB) according to an embodiment of the present invention. In the DAB, a plurality of the service components 220 constituting the services 230 are transmitted via a plurality of sub channels 210, respectively. In this embodiment, the plurality of services 230 form an ensemble 240. Here, the services 230 denote outputs such as program services or data services selected by a user, and the service components 220 denote elements of the services 230. The service components 220 are linked to one another according to multiplex configuration information (MCI). Also, each of the service components 220 is transmitted via a corresponding sub channel (SubCh) 210 or a fast information data channel (FIDC).

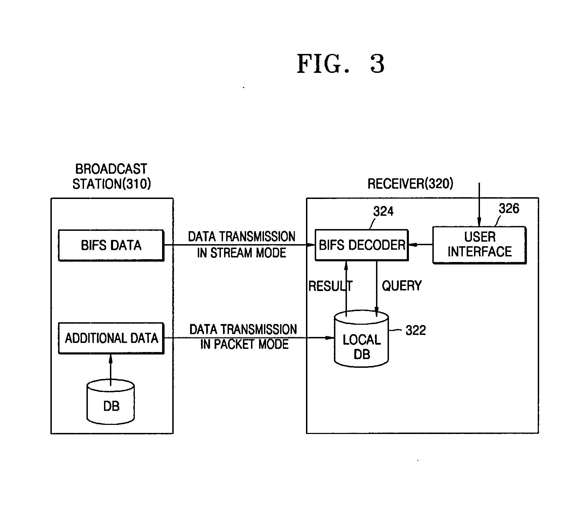

FIG. 3 is a block diagram of a DAB system that receives additional data, makes a database, and allows interactive use of the database according to an embodiment of the present invention.

DAB data is commonly transmitted in either a stream mode or a packet mode. In the steam mode, only data is transmitted at a fixed bit rate within a given sub channel without a header. In the packet mode, a packet is made by adding a header to data, so that various service components can be multiplexed and transmitted within a given sub channel.

Referring to FIG. 3, a DAB broadcast station 310 transmits additional data to a receiver 320 in the packet mode, and the receiver 320 receives the additional data and stores it in a local database (DB) 322. The additional data may be, by way of a non-limiting example, a detailed profile of a player transmitted together with a baseball game broadcast. In the stream mode, audio/video (AV) data and Binary Format for Scene (BIFS) data are transmitted. The BIFS data denotes a description regarding a screen composition. Also, the BIFS data is an extension of a virtual reality modeling language (VRML) that can realize virtual reality in an Internet virtual space. The BIFS data allows objects, which are encoded with natural or synthetic voice or images, to be arranged in a virtual time-space and a user to manipulate the objects. That is, the BIFS data allows interaction between the user and the DAB system. The description of the screen composition is converted into binary data so as to compress the description.

The BIFS data uses various types of nodes to compose a screen. The screen size or the positions of objects displayed on the screen can be changed according to a user input. Such interaction between the user and the DAB system can be performed through the BIFS data. In particular, a node in the BIFS data allows interaction between the user and the DAB system.

The received BIFS data is decoded by a BIFS decoder 324 to obtain a user interface, i.e., a BIFS node. When a user input is received via a user interface unit 326, a query regarding the user input is made using the BIFS node and transmitted to the local DB 322 so as to obtain desired information. The user interface is transmitted through a node of the BIFS data called ServerCommand. An example of the ServerCommand node is as follows:
ServerCommand {
   eventin SFBool trigger
   exposedField SFBool enable
   exposedField MFString url
   exposedField SFString command
   }.

In the ServiceCommand node, data in the "command" field becomes a query used for providing the user input to the local DB 322. The local DB 322 stores the additional data in a type of a relational database. The "url" field indicates the position of the local DB 322 of the receiver 320. The additional data stored in the local DB 322 is produced by the DAB broadcast station 310 and transmitted to the local DB 322 via a main service channel (MSC).

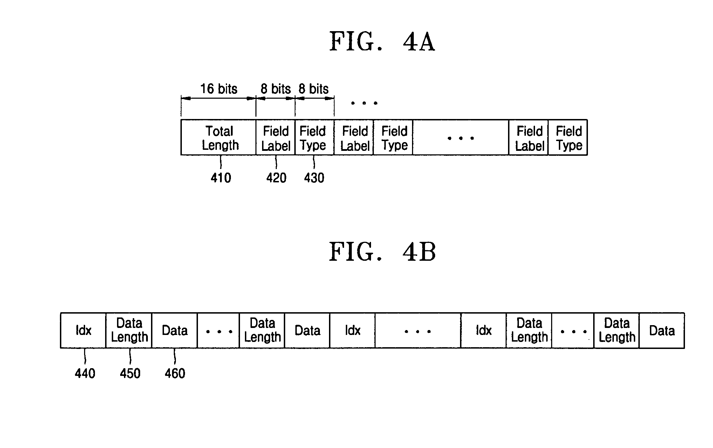

The construction of a database according to an embodiment of the present invention will now be described in greater detail. FIG. 4A illustrates the syntax of additional data transmitted via an MSC. Referring to FIG. 4A, a total length field 410 stores a total number of bits required to record all of the field data, which consists of field labels and field types. A field label 420 and a field type 430 are fields in which a field name, and the type of data stored in the field label 420 are recorded, respectively. For instance, the type of data such as an integer, a date, time, an image, or a currency that can be stored in the field label 420 may be recorded in the "field type" field 430. That is, the type of data recorded in the "field type" field 430 is not limited. As shown in FIG. 4A, the syntax of the additional data may include a plurality of field labels and a plurality of field types.

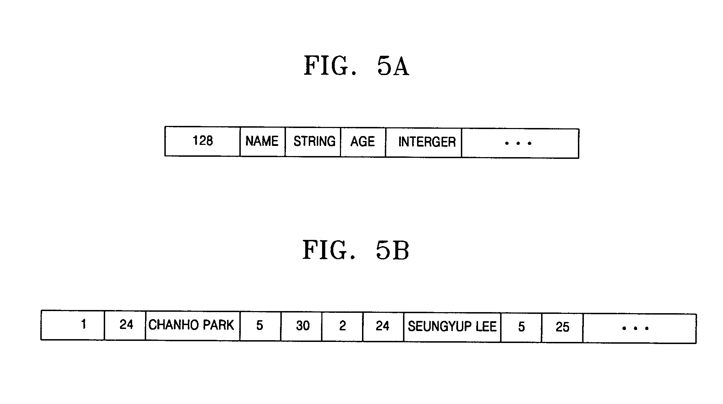

FIG. 4B illustrates a format that corresponds to a "field label" field and in which data is actually stored. Referring to FIG. 4B, ldx 440, data length 450, and data 460 denote an index of a field, the length of data 460, and data that is to be transmitted are recorded, respectively. Several pieces of data containing the data length 450 and the data 460 may belong to the "ldx" field 440. For instance, when transmitting additional data shown in Table 1, a database of the additional data can be made as shown in FIGS. 5A and 4B.

**[Table 1]**

| | | | |
|---|---|---|---|
| | Name | Age | ... |
| 1 | Chanho Park | 30 | ... |
| 2 | Seungyup Lee | 25 | ... |
| ... | ... | ... | ... |

FIGS. 5A and 5B illustrate formats in which the additional data shown in Table 1 are stored as a database. Referring to FIG. 5A, the total number of bits of data, e.g., 128, required to record all the fields of data is stored in a "total length" field, "name" is stored in a first field label, and "string" is stored in a first "field type" field corresponding to the first field label. Also, "age" is stored in a next "field label" field and "integer" is stored in a next "field type" field corresponding to the next "field label" field.

FIG. 5B illustrates a format in which data is actually stored. Referring to FIG. 5B, "1" is stored in a first ldx field; a bit value of 24, which represents "Chanho Park", is stored in a first data length field; and "Chanho Park" is stored in a first data field. A bit value of 5, which represents "30", is stored in a second data length field, and "30" is stored in a second data field. Also, "2" is stored in a second Idx field, a bit value of 24, which represents "Seungyup Lee", is stored in a third data length field, and "Seungyup Lee" is stored in a third data field. Also, a bit value of 5, which represents "25", is stored in a fourth data length field, and "25" is stored in a third data field.

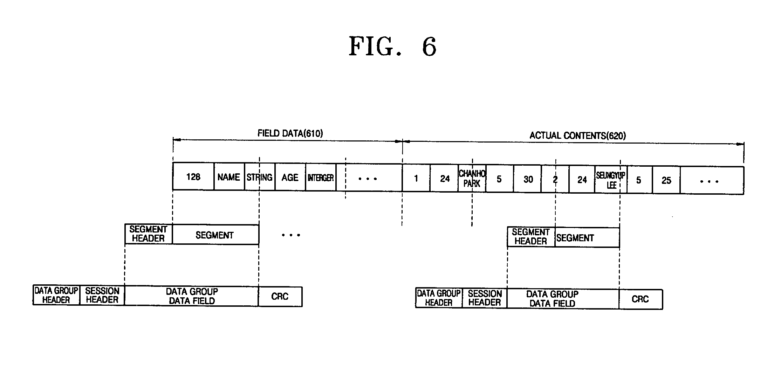

FIG. 6 illustrates data groups into which a database of additional data that will be transmitted to a receiver is divided according to an embodiment of the present invention. Referring to FIG. 6, the additional data made in formats of FIGS. 5A and 5B is divided into segments, and the segments are divided into data groups and transmitted to the receiver. Referring to FIG. 6, field data 610 and actual contents 620 are divided into segments of different sizes, divided into groups, and transmitted to the receiver, respectively.

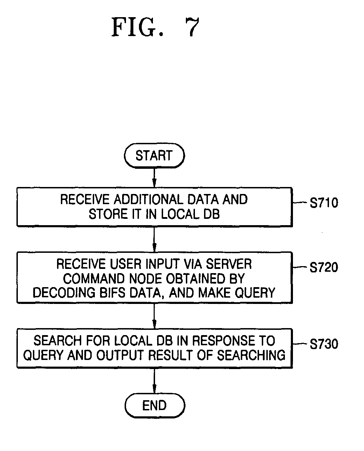

FIG. 7 is a flowchart of a method of interactively using additional data according to an embodiment of the present invention. Referring to FIG. 7, a database of additional data is received and stored in a local DB (S710). The type of database may be those illustrated by FIGS. 4A and 4B. Next, information, e.g., BIFS data, regarding a screen composition, which is contained in service data, is decoded to make a node using the node, a user input is received, and the user input is transformed into a query that requests a search for the database, and the query is output (S720). Next, the local DB is searched for in response to the query and the result of searching is output (S730).

A method of interactively using additional data according to the present embodiment can be embodied as a computer program. Also, the program may be stored in a computer readable medium that is read and executed by a computer to realize the method. The computer readable medium may be any medium, such as a magnetic recording medium, an optical recording medium, and a carrier wave.

According to the above-described embodiment of the present invention, a DAB receiver includes a simpler, small-sized database that allows a dynamic service to be provided to a user without accessing a database installed in a remote place.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of interactively using additional data, comprising:
receiving the additional data and storing the received additional data in a specified database (322);
receiving a user input via a user input interface (326) obtained by decoding information regarding a screen composition contained in service data, transforming the user input into a query that requests a search of the database (322), and outputting the query; and
searching the database (322) in response to the query and outputting a result of the searching.

2. The method of claim 1, wherein the database (322) is a relational database (322).

3. The method of claim 2, wherein the relational database (322) includes:
a field including at least one pair of a field label (420) that categorizes stored data and a field type (430) that represents a format in which the field label (420) is stored; and
field data including at least one pair of an index, and at least one piece of data corresponding to the index and a length of the data.

4. The method of any preceding claim, wherein the additional data is received in a packet mode in digital audio broadcasting.

5. The method of any preceding claim, wherein the information regarding the screen composition is received in a stream mode in digital audio broadcasting, and binary format for scene (BIFS) data.

6. The method of any preceding claim, wherein the user input interface (326) is a BIFS node.

7. The method of any preceding claim, wherein the receiving a user input includes:
decoding the information regarding the screen composition contained in the service data, to make the user input interface (326); and
receiving a user input via the user input interface (326), transforming the user input into the query using a BIFS server command constituting the information regarding the screen composition, and outputting the query.

8. The method of claim 7, wherein the BIFS server command includes:
a uniform resource locator (URL) indicating a position of the database (322) that is to be searched in response to the query; and
a command received via the user input interface (326) .

9. An apparatus for processing additional data, comprising:
a local database (322) for receiving the additional data and for storing the received additional data; and
a decoder (324) for decoding information regarding a screen composition to make a user input interface (326), for receiving a user input via the user input interface (326), for transforming the user input into a query that requests a search of the local database (322), and for outputting the query.

10. The apparatus of claim 9, wherein the local database (322) is operable to receive the query, to search data in the local database (322), and to output a result of the searching.

11. The apparatus of claim 9 or claim 10, wherein the database (322) is a relational database (322).

12. The apparatus of claim 11, wherein the relational database (322) includes:
a field including at least one pair of a field label (420) that categorizes stored data and a field type (430) that represents a format in which the field label (420) is stored; and
field data including at least one pair of an index and at least one piece of data corresponding to the index and a length of the data.

13. The apparatus of any one of claims 9 to 12, wherein the information regarding the screen composition is received in a stream mode in digital audio broadcasting, and binary format for scene (BIFS) data.

14. The apparatus of any one of claims 9 to 13, wherein the user input interface (326) is a BIFS node.

15. A computer-readable storage medium encoded with processing instructions for causing a processor to perform a method of interactively using additional data, the method comprising:
receiving additional data and storing the received additional data in a specified database (322);
receiving a user input via a user input interface (326) obtained by decoding information regarding a screen composition contained in service data, transforming the user input into a query that requests a search of the database (322), and outputting the query; and
searching the database (322) in response to the query and outputting a result of the searching.

16. A digital audio broadcast (DAB) system, comprising:
a broadcast station for transmitting binary format for scene (BIFS) data in a stream mode and additional data in a packet mode;
a receiver (320) having a BIFS decoder (324) and a database (322), the receiver (320) being operable to receive the transmitted BIFS data and the transmitted additional data, to store the received additional data in the DB, the BIFS decoder (324) being operable to decode the received BIFS data to obtain a BIFS node receiving user input; and
a user interface (326) operable such that,
when a user input is received by the user interface (326), a query regarding the user input is made using the BIFS node and the database (322) is searched to satisfy the query.

17. The system of claim 16, wherein the BIFS data is an extension of a virtual reality modeling language (VRML) that realizes virtual reality in an Internet virtual space.

18. The system of claim 17, wherein the BIFS data allows objects encoded with natural or synthetic voice or images, to be arranged in a virtual time-space and allows a user to manipulate the objects.
